# EUROPEAN PATENT SPECIFICATION

(11) **EP 0 356 144 B1**
(45) Date of publication and mention of the grant of the patent: **19.07.1995**
(21) Application number: 89308353.5
(22) Date of filing: 17.08.1989
(51) Int. Cl.: B29C 67/00, B29C 39/42

(54) **Method of producing resin articles**
Verfahren zum Herstellen von Kunststoffgegenständen
Procédé de fabrication d'objets en matière plastique

(30) Priority: 18.08.1988 GB 8819690
(43) Date of publication of application: 28.02.1990
(73) Proprietor: DSM N.V., 6411 TE Heerlen (NL)
(72) Inventor: Parr, Alan James, Corwen Clwyd North Wales (GB)

(56) References cited:
- DD-A- 140 121
- GB-A- 1 055 640
- GB-A- 2 197 656
- SU-A- 670 582
- INTERNATIONAL POLYMER SCIENCE AND TECHNOLOGY, vol. 12, no. 10, 1985, page 75, Shawbury, Shrewsbury, GB; E.A. TAGIEV et al.: "Electrical method of studying the kinetics of curing of thermosets during ultrasonic moulding"

## Description

The present invention relates to a method of producing resin articles, such as polyester articles, and in particular to a method of producing fibre reinforced thermosetting polymer or cast polymer articles.

Fibre reinforced thermosetting plastics, for example, are widely used for manufacturing a large range of components. Various methods can be used including open moulding, resin transfer moulding, filament winding, pultrusion, casting and pre-impregnation. When a thermosetting polyester resin is used, conventionally the resin is caused to polymerise by the inclusion of a catalyst, such as an organic peroxide. Such reactions can take place at room temperature dependent upon the catalyst used but reaction rates are frequently increased by elevating the temperature of the reaction system. However, heating the reaction system by conventional means, such as by infra red radiation, using heated moulds or using pre-heated resin, can prove to be difficult and particularly with large components, time consuming and expensive.

The object of this invention is to provide a method of producing resin articles, wherein the resin reaction rate may be increased.

According to the present invention there is provided a method of producing resin articles from a thermosetting resin reaction system which system comprises fibre reinforcements comprising the step of subjecting the resin reaction system to high frequency vibration of 30 to 50 KHz during reaction.

Subjecting a resin reaction system, such as of an unsaturated polyester resin, to vibration is believed to reduce setting or gel time compared with a corresponding unvibrated system.

Any suitable means of imparting vibration may be used including mechanical and acoustic. Improved reaction times can be achieved with vibration frequencies in the range of 30 to 50 KHz.

Effecting polymerization by ultrasonic vibration is known from GB-A-1,055,640, but said reference is only directed to a process for polymerizing monomers in a continuous process into polymeric, thermoplastic particles. GB-A-1,055,640 does not describe a process for curing fibre reinforced thermosetting resin in a mold. DD-A-140121 relates to the production of fibre reinforced mouldings cf. the preamble of claim 1, by charging the mould with resin and reinforcement and applying vibration via pressure container containing incompressible medium. After filling the container the mould is closed and vibratory forces of controlled amplitude and frequency are applied through the incompressible medium by mechanical or electrical field methods. For example ultrasonic vibrations, between 0 and 200 kHz are applied in combination with modified epoxy resins. The vibrations are applied through an elastically deformable layer to cause wetting, compaction and deaeration of the impregnated material. Next, the curing takes place by electromagnetic radiation. DD-A-140121 does not disclose or suggest a method of producing resin articles, especially pipes, wherein the resin reaction is increased by a method comprising the step of subjecting the resin reaction system to vibrations between 30 and 50 KHz during reaction.

The invention has application to any fabrication technique especially in relation to resin used in fibre reinforced plastics and is particularly useful in resin transfer moulding and similar processes where resin is caused to flow into a closed mould containing fibre reinforcement. The invention is also particularly useful in relation to pre-impregnated glass fabrication systems.

The invention will now be further described with reference to the following Examples.

### Example 1

A polyester resin was mixed with 25% of its weight of milled glass fibre. 1% of a 1% by weight solution of cobalt naphthenate was mixed in followed by 2% by weight of methyl ethyl ketone peroxide (50% solution). The resultant mixture was immediately poured into two identical moulds. The first of these moulds was immersed in an unstirred water bath at 22 degrees C. The second mould was simultaneously immersed in a water bath at 22 degrees C in which the water was subjected to mechanical vibrations of 35 KHz. The time taken for the first unvibrated resin to solidify was 29.5 minutes. The resin in the vibrated water bath solidified in 7.6 minutes.

### Example 2

Resin containing 1% of a 1% by weight solution of cobalt naphthenate and 2% by weight of methyl ethyl ketone peroxide (50% solution) was injected into a small closed mould containing continuous filament glass mat so that the final weight ratio of resin to glass was 3:2. The system was allowed to gel and the time for this gellation was 33 minutes. The same experiment was repeated but the mould was vibrated mechanically at 30 KHz. The resin gelled in 15 minutes.

### Example 3

Example 2 was repeated but with jute fibre instead of glass mat. In this Example the unvibrated sample gelled in 29 minutes and the vibrated sample gelled in 14 minutes.

### Example 4

Example 2 was again repeated but with a weight ratio of resin to glass of 1:1. In this Example the resin gelled in 35 minutes when not vibrated and in 16 minutes when vibrated.

### Example 5

Example 1 was repeated but using finely ground calcium carbonate instead of milled glass fibre. In this example the unvibrated sample solidified in 34 minutes and the vibrated sample solidified in 16 minutes.

### Example 6

A piece of glass fibre mat was impregnated with polyester resin containing 0.5% of a 1% by weight solution of cobalt naphthenate and 0.75% by weight methyl ethyl ketone peroxide. The pre-impregnated mat was quickly sealed in a water impermeable film and forced against the inside of a clay pipe. The pipe was filled with water at 20 degrees C and the water was subjected to vibration of 50 KHz. The system gelled in 15 minutes. An equivalent system but without vibration gelled in 27 minutes.

### Example 7

Example 6 was repeated but the catalyst was replaced with 0.75% by weight of Trigonox 42S - t-butyl perisononanoate and 0.75% by weight Perkadox 16 - bis - (4t-butylcyclohexyl) peroxy dicarbonate. In this case the water was warmed to 35 degrees C. The sample vibrated at 35 KHz gelled in 11 minutes, an unvibrated sample gelled in 21 minutes.

### Example 8

Example 7 was repeated except that the system was vibrated at 50 KHz. In this case the resin gelled in 8 minutes compared with 11 minutes for a sample vibrated at 35 KHz and 21 minutes for an unvibrated sample.

## Claims

1. A method of producing resin articles from a thermosetting resin reaction system which system comprises fibre reinforcements, characterized in that the method comprises the step of subjecting the resin reaction system in a mold to high frequency vibration of 30 to 50 KHz during reaction.

2. A method according to claim 1, characterized in that said mold is a pipe.

3. A method according to any one of claims 1-2, characterized in that vibration is produced mechanically or acoustically.

4. A method according to any one of claims 1-3, characterized in that the resin is an unsaturated polyester resin.

5. A method according to claim 1, characterized in that said vibration is at a frequency of 35 to 50 KHz.

## Patentansprüche

1. Verfahren zum Herstellen Von Harz- bzw. Kunststoffgegenständen aus einem Reaktionssystem mit einem wärmehärtbaren Harz bzw. Kunststoff, welches System Faserverstärkungen umfaßt, dadurch gekennzeichnet, daß das Verfahren den Schritt umfaßt, daß das Harzreaktionssystem während der Reaktion in einer Form einer Hochfrequenzschwingung von 30 bis 50 kHz ausgesetzt wird.

2. Verfahren nach Anspruch 1, dadurch gekennzeichnet, daß die Form ein Rohr ist.

3. Verfahren nach einem der Ansprüche 1 - 2, dadurch gekennzeichnet, daß die Schwingung mechanisch oder akustisch erzeugt wird.

4. Verfahren nach einem der Ansprüche 1 - 3 dadurch gekennzeichnet, daß das Harz ein ungesättigtes Polyesterharz ist.

5. Verfahren nach Anspruch 1, dadurch gekennzeichnet, daß die Schwingung eine Frequenz von 35 bis 50 kHz aufweist.

## Revendications

1. Procédé de production d'articles en résine à partir d'un système de réaction de résine thermodurcissable, système qui comprend des renforcements fibreux, caractérisé en ce que le procédé consiste à soumettre le système de réaction de résine dans un moule à une vibration haute fréquence de 30 à 50 kHz pendant la réaction.

2. Procédé selon la revendication 1, caractérisé en ce que ledit moule est un tuyau.

3. Procédé selon la revendication 1 ou 2, caractérisé en ce qu'on produit la vibration par voie mécanique ou acoustique.

4. Procédé selon l'une quelconque des revendications 1 à 3, caractérisé en ce que la résine est une résine de polyester non saturé.

5. Procédé selon la revendication 1, caractérisé en ce que ladite vibration se fait à une fréquence de 35 à 50 kHz.
